Europäisches Patentamt

European Patent Office

Office européen des brevets

(19)

(11) EP 0 908 233 A1

(12) DEMANDE DE BREVET EUROPEEN

(43) Date de publication:
14.04.1999 Bulletin 1999/15

(51) Int Cl.⁶: **B01J 29/04**, C10G 47/16

(21) Numéro de dépôt: 98402522.1

(22) Date de dépôt: 12.10.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 13.10.1997 FR 9712864
13.10.1997 FR 9712865

(71) Demandeur: INSTITUT FRANCAIS DU PETROLE
92500 Rueil Malmaison (FR)

(72) Inventeurs:
• Benazzi, Eric
78400 Chatou (FR)

• Brendle, Jocelyne
68270 Wittenheim (FR)
• le Dred, Ronan
68400 Riedisheim (FR)
• Baron, Jacques
68100 Mulhouse (FR)
• Saehr, Daniel
68400 Riedisheim (FR)
• George-Marchal, Nathalie
75005 Paris (FR)
• Lacombe, Sylvie
92500 Rueil Malmaison (FR)

(54) **Phyllosilicate 2:1 dioctaedrique ponte à grande distance réticulaire, catalyseur et procédé de conversion**

(57) L'invention concerne des phyllosilicates 2:1 dioctaédriques dont la distance réticulaire est au moins égale à 2,0 x 10⁻⁹m et comprenant dans l'espace interfoliaire des piliers à base d'au moins un des composés choisi dans le groupe formé par $SiO_2$, $Al_2O_3$, $TiO_2$, $ZrO_2$, $V_2O_5$, ou toute combinaison de ces derniers.

De préférence, ils contiennent du fluor.

L'invention concerne également un procédé pour leur préparation incluant un traitement par un agent tensio-actif suivi d'un traitement par une amine primaire ou secondaire et au moins un alkoxyde d'un élément choisi dans le groupe formé par les éléments Si, Al, Zr, Ti et V.

L'invention concerne également un catalyseur comprenant ledit phyllosilicate, au moins une matrice et éventuellement une zéolite Y.

L'invention concerne également un procédé de conversion d'hydrocarbures avec ce catalyseur, et en particulier un procédé d'hydrocraquage.

EP 0 908 233 A1

Printed by Jouve, 75001 PARIS (FR)

## Description

La présente invention concerne des phyllosilicates 2:1 dioctaédriques, de préférence synthétisés en milieu fluorure en présence de l'acide fluorhydrique et/ou d'une autre source d'anions fluorure, lesdits phyllosilicates étant pontés et présentant une grande distance réticulaire ; la distance réticulaire représentée par $d_{001}$ étant la somme de l'épaisseur d'un feuillet et de l'espacement interfoliaire.

L'invention conceme également un procédé de préparation pour obtenir ledit phyllosilicate.

Ces phyllosilicates peuvent entrer dans la composition de catalyseurs utilisés pour l'hydrocraquage.

La présente invention concerne également un catalyseur comprenant au moins un phyllosilicate 2:1 dioctaédrique, de préférence synthétisé en milieu fluorure (en présence de l'acide fluorhydrique et/ou d'une autre source d'anions fluorure) puis ponté, ledit phyllosilicate présentant une grande distance réticulaire (la distance réticulaire étant la somme de l'épaisseur d'un feuillet et de l'espacement interfoliaire) le catalyseur comprenant également au moins une matrice et éventuellement au moins une zéolite Y de structure faujasite. L'invention concerne également un procédé de conversion de charges hydrocarbonées utilisant ce catalyseur, en particulier un procédé d'hydrocraquage.

L'hydrocraquage de coupes pétrolières lourdes est un procédé très important du raffinage qui permet de produire, à partir de charges lourdes excédentaires et peu valorisables, les fractions plus légères telles que essences, carburéacteurs et gazoles légers que recherche le raffineur pour adapter sa production à la structure de la demande. Par rapport au craquage catalytique, l'intérêt de l'hydrocraquage catalytique est de fournir des distillats moyens, carburéacteurs et gazoles, de très bonne qualité. En revanche, l'essence produite présente un indice d'octane beaucoup plus faible que celle issue du craquage catalytique.

Les catalyseurs utilisés en hydrocraquage sont tous du type bifonctionnel associant une fonction acide à une fonction hydrogénante. La fonction acide est apportée par des supports de grandes surfaces (150 à 800 m2.g$^{-1}$ généralement) présentant une acidité superficielle, telles que les alumines halogénées (chlorées ou fluorées notamment), les combinaisons d'oxydes de bore et d'aluminium, les silices-alumines amorphes et les zéolithes. La fonction hydrogénante est apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VI de la classification périodique tels que chrome, molybdène et tungstène et au moins un métal du groupe VIII.

L'équilibre entre les deux fonctions acide et hydrogénante est le paramètre fondamental qui régit l'activité et la sélectivité du catalyseur. Une fonction acide faible et une fonction hydrogénante forte donnent des catalyseurs peu actifs, travaillant à température en général élevée (supérieure ou égale à 390 °C), et à vitesse spatiale d'alimentation faible (la VVH exprimée en volume de charge à traiter par unité de volume de catalyseur et par heure est généralement inférieure ou égale à 2) mais dotés d'une très bonne sélectivité en distillats moyens. Inversement, une fonction acide forte et une fonction hydrogénante faible donnent des catalyseurs très actifs mais présentant une mauvaise sélectivité en distillats moyens. Il est donc possible, en choisissant judicieusement chacune des fonctions, d'ajuster le couple activité/sélectivité du catalyseur.

Ainsi, c'est un des grands intérêts de l'hydrocraquage de présenter une grande flexibilité à divers niveaux : flexibilité au niveau des catalyseurs utilisés, qui amène une flexibilité des charges à traiter, et au niveau des produits obtenus. Un paramètre aisé à maîtriser est l'acidité du support du catalyseur.

Les catalyseurs conventionnels de l'hydrocraquage catalytique sont, pour leur grande majorité, constitués de supports faiblement acides, tels les silice-alumines amorphes par exemple. Ces systèmes sont utilisés pour produire des distillats moyens de très bonne qualité, encore, lorsque leur acidité est très faible, des bases huiles.

Dans les supports peu acides, on trouve la famille des silice-alumines amorphes. Beaucoup de catalyseurs du marché de l'hydrocraquage sont constitués de silice-alumine associée, soit à un métal du groupe VIII soit, de préférence quand les teneurs en poisons hétéroatomiques de la charge à traiter dépassent 0,5 % en poids, à une association de sulfures des métaux des groupes VIB et VIII. Ces systèmes ont une très bonne sélectivité en distillats moyens, et les produits formés sont de bonne qualité. Ces catalyseurs, pour les moins acides d'entre eux, peuvent également produire des bases lubrifiantes. L'inconvénient de tous ces systèmes catalytiques à base de support amorphe est, comme on l'a dit, leur faible activité.

Les travaux de recherche effectués par le demandeur l'ont conduit à montrer que, de façon surprenante, un catalyseur contenant au moins un phyllosilicate 2:1 dioctaédrique, de préférence synthétisé en milieu fluorure (en présence de l'acide HF et/ou d'une autre source d'anions fluorure), puis ponté (de préférence par la méthode ici décrite) associé éventuellement à une zéolithe Y de structure faujasite, permet d'obtenir une sélectivité en distillats moyens nettement améliorée par rapport aux catalyseurs connus dans l'art antérieur.

La présente invention concerne plus précisément un phyllosilicate 2:1 dioctaédrique dont la distance réticulaire représentée par $d_{001}$ est au moins égale à $2,0 \times 10^{-9}$m et comprenant dans l'espace interfoliaire des piliers à base d'au moins un des composés choisi dans le groupe formé par $SiO_2$, $Al_2O_3$, $TiO_2$, $ZrO_2$, $V_2O_5$, ou toute combinaison de ces derniers.

De préférence, il contient du fluor.

Selon la présente invention, les phyllosilicates 2:1 dioctaédriques, (de préférence préalablement préparés en milieu fluorure en présence de l'acide HF et/ou d'une autre source d'anions fluorures) pontés présentent une distance réticulaire $d_{001}$ au moins égale à 2,0 x $10^{-9}$ m, de manière préférée au moins égale 2,65 x $10^{-9}$ m et de manière encore plus préférée supérieure à 2,8 x $10^{-9}$ m ou encore à 3,0 x $10^{-9}$ m ; des distances au moins égale à 3,3 x $10^{-9}$ m peuvent être atteintes notamment le cas de piliers $SiO_2$ - $ZrO_2$. Elle est généralement inférieure ou égale à 6,0 x $10^{-9}$ m, de préférence à 5,0 x $10^{-9}$ m. La distance réticulaire, représentée par $d_{001}$, représente la somme de l'épaisseur d'un feuillet et de l'espacement interfoliaire. Cette valeur est directement accessible par la méthode classique de diffraction des rayons X sur poudre orientée.

L'invention concerne également un procédé pour la préparation desdits phyllosilicates dans lequel le phyllosilicate est mis en suspension dans une solution d'un agent tensio-actif, puis après séparation du solide de la solution, le phyllosilicate est mis au contact d'un mélange comprenant au moins une amine primaire ou secondaire et au moins un alkoxyde d'un élément choisi dans le groupe formé par Si, Al, Zr, Ti, V.

Les phyllosilicates 2:1 dioctaédriques sont des minéraux qui résultent de l'empilement de feuillets élèmentaires. Bien que les liaisons chimiques entre les éléments de la structure des phyllosilicates soient ionocovalentes, elles seront supposées ioniques, afin de simplifier la description.

A partir d'une représentation où les ions $O^{2-}$ sont dans un plan au contact les uns des autres, il est possible d'obtenir un plan représentant une cavité hexagonale, dit plan hexagonal, en retirant dans une rangée sur deux d'ions $O^{2-}$, un ion $O^{2-}$ sur deux.

La structure d'une phyllite peut être représentée simplement à partir d'arrangements de plans hexagonaux d'ions $O^{2-}$ et de plans compacts d'ions $O^{2-}$ et $OH^-$. Les ions OH- remplissent les cavités des plans hexagonaux d'ions $O^{2-}$. La superposition de deux plans compacts encadrés de part et d'autre par un plan hexagonal permet de définir une couche octaédrique (O) entre deux couches tétraédriques (T) d'où la dénomination de feuillets TOT.

Un tel arrangement, aussi dénommé 2:1, permet de définir un plan de cavités octaédriques situé dans la couche octaédrique entre deux plans de cavités tétraédriques, un dans chaque couche tétraédrique. Chaque tétraèdre a un ion $O^{2-}$ commun avec la couche octaédrique et chacun des trois autres ions $O^{2-}$ est partagé avec un autre tétraèdre de la même couche tétraédrique.

La maille cristalline est ainsi constituée de 6 cavités octaédriques ayant de part et d'autre 4 cavités tétraédriques. Un tel arrangement correspond dans le cas d'une phyllite constituée des éléments Si, Al, O, H à la formule idéale $Si_8 (Al_4\square_2)O_{20} (OH)_4$. Les cavités tétraédriques contiennent l'élément silicium, les cavités octaédriques l'élément aluminium mais dans ce cas une cavité octaédrique sur 3 est vide ($\square$). Un tel ensemble est électriquement neutre. On utilise souvent la demi-maille, qui a pour formule :

$$Si_4(Al_2\square))O_{10}(OH)_2$$

L'élément silicium tétraédrique peut être substitué par des éléments trivalents tels que par exemple l'aluminium ou le gallium ou le fer ($Fe^{3+}$). De même, l'élément aluminium octaédrique peut être substitué par :

- les éléments trivalents cités précédemment, ou un mélange de ces éléments,
- des éléments divalents (Mg).

Ces substitutions confèrent des charges négatives à l'édifice. Celles-ci entraînent l'existence de cations de compensation échangeables situés dans l'espace interfoliaire. L'épaisseur de l'espace interfoliaire dépend de la nature des cations de compensation et de leur état d'hydratation. Cet espace est d'ailleurs capable d'accueillir d'autres espèces chimiques comme de l'eau, des amines, des sels, des alcools, des bases, etc....

L'existence de groupes -OH entraîne une instabilité thermique due à la réaction de déshydroxylation d'équation : 2 -OH --> -O- + $H_2O$. A cet égard l'introduction, lors de la synthèse, de l'élément fluor dans la structure en place des groupes O-H conduit à des phyllosilicates de stabilité thermique nettement améliorée.

Les phyllosilicates selon l'invention sont des phyllosilicates 2:1 dioctaédriques dont les caractéristiques sont données ci-après, dans lesquels des piliers ont été introduits dans l'espace interfoliaire (les piliers étant choisi parmi $SiO_2$, $Al_2O_3$, $TiO_2$, $ZrO_2$, $V_2O_5$) de façon à atteindre une distance réticulaire $d_{001}$ d'au moins 2,0 x $10^{-9}$m.

La formule chimique générale (pour une demi-maille) des phyllosilicates 2:1 dioctaédriques de départ, de préférence synthétisés en milieu fluorure en présence de l'acide HF et/ou d'une autre source d'anions fluorure, avant pontage est la suivante :

$$M^{m+}x/m ((Si_{(4-x)}T_x)(T_2\,\square_1)O_{10}(OH)_{(2-y)}F_y)^{x-}$$

où

- T représente un élément choisi dans l'ensemble formé par les éléments du groupe IIIA (tels que par exemple B, Al, Ga) et le fer,
- M est au moins un cation de compensation choisi dans le groupe formé par les cations des éléments des groupes IA, IIA et VIII, les cations organiques contenant de l'azote, le cation ammonium, les cations des terres rares. Le cation est issu du milieu réactionnel ou introduit par au moins un procédé d'échange. Avantageusement, le cations issu du milieu réactionnel est choisi dans le groupe formé par les alcalins (excepté le lithium), le cation ammonium ($NH_4+$), les cations organiques contenant de l'azote (parmi lesquels les alkylammonium et les arylammonium) et les cations organiques contenant du phosphore (parmi lesquels les alkylphosphonium et les arylphosphonium). M peut aussi être un cation de compensation introduit par échange ionique post-synthèse, choisi dans le groupe formé par les cations des éléments des groupes IA, IIA et VIII de la classification périodique des éléments, les cations des terres rares (cations d'éléments de numéro atomique de 57 à 71 inclus), les cations organiques contenant de l'azote (parmi lesquels les alkylammonium et les arylammonium) et le cation ammonium.
- m est la valence du cation M,
- x est un nombre compris entre 0 et 2, de préférence 0,1 et 0,8 ;
- y un nombre compris entre 0 et 2 ; si le phyllosilicate contient du fluor, Y est supérieur à 0
- et $\square$ représente une cavité octaédrique.

Le diagramme de diffraction des rayons X du phyllosilicate 2:1 dioctaédrique de départ (avant pontage) est caractérisé par la présence des raies suivantes :

- une raie caractérisant la $d_{060}$ égale à $1,49 \pm 0,01 \times 10^{-10}$m dans le cas où le phyllosilicate dioctaédrique 2:1 comporte une couche octaédrique dont la composition est la suivante Si ($Al_2\square$),

- au moins une réflexion 001 telle que $d_{001}$ soit égal $1,25 \pm 0,3 \times 10^{-9}$ m suivant la nature du cation de compensation et son état d'hydratation à l'humidité considérée.

De préférence la teneur en fluor est telle que le rapport molaire F/Si soit compris entre 0,1 et 4, et de préférence 0,1 et 2.

Le phyllosilicate 2:1 dioctaédrique fluoré à la synthèse présente de plus, au moins un signal à rotation à l'angle magique du $^{19}F$, déterminé et bien connu par l'homme de l'art. Le déplacement chimique de ce signal dépend aussi de la composition de la couche octaédrique. Ainsi il correspond à une valeur de :

⇒ -133 ppm (± 5 ppm) en RMN à rotation à l'angle magique du $^{19}F$, dans le cas où le F a pour premiers voisins deux atomes d'aluminium, ce qui correspond à une couche octaédrique dont la composition est Si ($Al_2\square$),

⇒ -108 ppm (± 5 ppm) en RMN à rotation à l'angle magique du $^{19}F$, dans le cas où le F a pour premiers voisins deux atomes de gallium, ce qui correspond à une couche octaédrique dont la composition est Si ($Ga_2\square$),

⇒ -118 ppm (± 5 ppm) en RMN à rotation à l'angle magique du $^{19}F$, dans le cas où le F a pour premiers voisins un atome d'aluminium et un atome de gallium, ce qui correspond à une couche octaédrique dont la composition est la suivante Si (Ga, Al$\square$).

Lesdits phyllosilicates peuvent avantageusement être synthétisés en milieu fluorure en présence de l'acide HF et/ou d'une autre source d'anions fluorure et à un pH inférieur à 9, et de préférence compris entre 0,5 et 6,5.

La préparation de ce type de solides en milieu fluorure et leur caractérisation sont décrites dans les références ci-après dont l'enseignement est inclus dans la présente description : le brevet FR-A-2673930, une publication à la 202ème réunion de l'American Chemical Society (ACS) de New-York en août 1991 dont le contenu a été publié dans Synthesis of Microporous Materials, Extended clays and other Microporous Solids (1992)., un compte rendu de l'Académie des Sciences Paris , t. 315, Série II, p. 545-549, 1992.

Ces phyllosilicates 2:1 dioctaédriques sont pontés par exemple par un nouveau procédé comprenant les étapes suivantes :

- le phyllosilicate 2:1 dioctaédrique, de préférence sous sa forme $NH_4$, est mis en suspension dans une solution d'un agent tensio-actif dont la concentration varie entre 0,01 mole/litre et 1 mole/litre de préférence entre 0,05 et 0,7 mole/litre. Les agents tensio-actifs utilisables dans cette étape, sont de nature anionique, tels que à titre d'exemples non limitatifs les alkylsulfates et les alkylsulfonates, ou bien cationique parmi lesquels on peut citer les halogénures ou hydroxydes de tétralkylammonium tels que le chlorure de cétyltriméthylammonium ou bien encore des alkylammonium géminés.

A titre d'exemple, sont utilisables le bromure d'hexadecyltriméthylammonium, le bromure d'éthylhexadecyldimethylammonium, le bromure d'octadecyltriméthyl ammonium, le bromure de dodecyltriméthylammonium, le bromure de didodecyldimethylammonium. On peut également employer des tensio-actifs neutres, tels que le, par exemple, le triton X-100 ou les polyéthylènes oxydes (POE).

Après un temps de contact, durant lequel le milieu est agité, compris entre 5 minutes et 12 heures et de préférence entre 15 minutes et 6 heures et de manière encore plus préférée entre 15 minutes et 3 heures, l'ensemble est filtré puis lavé à l'eau distillée puis enfin séché sous air ou gaz inerte à une température comprise entre 40 et 150°C; pour une durée comprise entre 5 minutes et 24 heures et de préférence entre 30 minutes et 12 heures.

Dans le cas où le phyllosilicate n'est pas sous forme ammonium, il pourra subir préalablement tout traitement connu de l'homme de l'art de manière à obtenir le phyllosilicate 2:1 dioctaédrique majoritairement sous sa forme ammonium. On peut citer à titre d'exemple, non limitatif, de traitement pour réaliser cette transformation les échanges ioniques par des solutions aqueuses d'un sel d'ammonium (nitrate d'ammonium et/ou chlorure d'ammonium).

- le phyllosilicate 2:1 dioctaédrique traité selon le mode opératoire décrit dans l'étape précédente est ensuite mis au contact d'un mélange comprenant :

  - i) au moins une amine primaire du type $RNH_2$ ou d'une amine secondaire R'RNH, où R et R' sont choisis avantageusement parmi l'ensemble formé par les groupements carbonés, alkyl, iso-alkyl, napthényl, aromatique substitué ou non par d'autres groupements et pouvant contenir de 1 à 16 atomes de carbone,
  - ii) au moins un alkoxyde d'un élément ou d'un mélange d'alkoxydes, l'élément étant choisi dans l'ensemble formé par le silicium, l'aluminium, le zirconium, le titane, le vanadium, de formule générale M(OR)n, où M est l'élément décrit ci-dessus, n le degré de valence dudit élément et R un groupement choisi avantageusement dans l'ensemble formé par les groupes alkyls, iso-alkyls, napthényls et aromatiques substitués ou non. Les différents groupes -OR peuvent être identiques ou différents selon la nature du groupe R choisi dans l'ensemble défini ci-dessus.

    L'ensemble est laissé en contact, de préférence sous agitation durant une durée comprise entre 5 minutes et 12 heures et de préférence entre 5 minutes et 8 heures.
  - iii) le phyllosilicate 2:1 dioctaédrique ainsi ponté est ensuite filtré puis séché sous air ou sous gaz inerte à une température comprise entre 40 et 150°C; pour une durée comprise entre 5 minutes et 24 heures et de préférence entre 30 minutes et 12 heures.

Ce procédé de pontage permet d'introduire simplement et rapidement des piliers $SiO_2$, $Al_2O_3$, $TiO_2$, $ZrO_2$ $V_2O_5$ ou un mélange de ces piliers dans l'espace interfoliaire des phyllosilicates 2:1 dioctaédriques avantageusement préparés en milieu fluorure.

Par rapport au phyllosilicate 2:1 dioctaédrique de base, le phyllosilicate selon l'invention présente un spectre de diffraction des rayons X, qui permet d'évaluer la distance réticulaire $d_{001}$ qui a donc nettement augmenté à la valeur d'au moins $2,0 \times 10^{-10}$ m. On observe également que la surface spécifique a augmenté, elle se situe alors généralement entre 200 et 1000 m$^2$/g et de préférence entre 250 et 700 m$^2$/g. Les raies $d_{060}$ en spectre RX et les raies RMN à rotation à l'angle magique du $^{19}$F sont conservées.

La présente invention concerne également un catalyseur comprenant au moins un phyllosilicate 2:1 dioctaédrique (tel que précédemment décrit) dont la distance réticulaire est au moins égale à $2,0 \times 10^{-9}$ m et comprenant des piliers à base d'au moins un des composés choisi dans le groupe formé par $SiO_2$, $Al_2O_3$, $TiO_2$, $ZrO_2$ et $V_2O_5$ ou toute combinaison de ces derniers, au moins une matrice et éventuellement une zéolite Y.

Le catalyseur de la présente invention peut aussi renfermer une zéolithe Y de structure faujasite (Zéolite Molecular Sieves Structure, Chemistry and Uses, D.W. BRECK, J. WILLEY and Sons 1973) en particulier une zéolithe Y désaluminée de paramètre cristallin $24,24$ à $24,55 \times 10^{-10}$m. Parmi les zéolithes Y que l'on peut utiliser, on emploiera de préférence une zéolithe Y stabilisée, couramment appelée ultrastable ou USY soit sous forme au moins partiellement échangée avec des cations métalliques, par exemple des cations des métaux alcalino-terreux et/ou des cations de métaux de terres rares de numéro atomique 57 à 71 inclus, soit sous forme hydrogène.

Une zéolithe acide H-Y est particulièrement avantageuse et est caractérisée par différentes spécifications : un rapport molaire $SiO_2/Al_2O_3$ compris entre 8 et 70 et de manière préférée entre environ 12 et 40 ; une teneur en sodium inférieure à 0.15% poids déterminée sur la zéolithe calcinée à 1 100°C; un paramètre cristalllin de la maille élémentaire compris entre $24,55 \times 10^{-10}$ m et $24,24 \times 10^{-10}$ m et de manière préférée entre $24,38 \times 10^{-10}$ m et $24,26 \times 10^{-10}$m ; une capacité CNa de reprise en ions sodium, exprimée en gramme de Na par 100 grammes de zéolithe modifiée, neutralisée puis calcinée, supérieure à environ 0,85 ; une surface spécifique déterminée par la méthode B.E.T supérieure à environ 400 m$^2$/g et de préférence supérieure à 550 m$^2$/g; une capacité d'adsorption de vapeur d'eau à 25°C pour une pression partielle de 2,6 Torrs (soit 34,6 MPa), supérieure à environ 6%, une répartition poreuse, déterminée par physisorption d'azote, comprenant entre 5 et 45% et de préférence entre 5 et 40% du volume poreux total de la zéolithe contenu dans des pores de diamètre compris entre $20 \times 10^{-10}$ m et $80 \times 10^{-10}$m, et entre 5 et 45% et de préférence entre 5 et 40 % du volume poreux total de la zéolithe contenu dans les pores de diamètre supérieur à 80 x $10^{-10}$m et généralement inférieur à 1000x$10^{-10}$ , le reste du volume poreux étant contenu dans les pores de diamètre inférieur à 20 x $10^{-10}$ m.

Le catalyseur de la présente invention renferme également au moins une matrice habituellement amorphe ou mal cristallisée choisie par exemple dans le groupe formé par l'alumine, la silice, la magnésie, l'oxyde de titane, la zircone, les phosphates d'aluminium, de titane ou de zirconium, l'oxyde de bore, les combinaisons des deux au moins de ces composés et les combinaisons alumine-oxyde de bore.

La matrice est de préférence choisie dans le groupe formé par la silice, l'alumine, la magnésie, les combinaisons silice-alumine, les combinaisons silice-magnésie.

Le catalyseur de la présente invention renferme donc :

a) de 1 à 80 %, ou encore de 4 à 70%, de préférence de 10 à 60 % et de manière encore plus préférée de 15 à 50 % en poids d'au moins un phyllosilicate 2:1 dioctaédrique de préférence synthétisé en milieu fluorure et ponté,
b) de 0 (ou 0,1) à 30%, de préférence de 0 (ou 0,1%) à 20 % et de manière encore plus préférée de 0 (ou 0,1) à 10 % d'au moins une zéolithe Y de structure faujasite, forme hydrogène, de préférence ayant les caractéristiques données ci-avant.
c) de 1 à 99% pds d'au moins une matrice définie ci-avant.

Le catalyseur de la présente invention peut être préparé par toutes les méthodes bien connues de l'homme du métier. Une des méthodes préférées dans la présente invention consiste à malaxer le phyllosilicate 2:1 dioctaédrique ponté et éventuellement une zéolithe Y dans un gel humide d'alumine pendant quelques dizaines de minutes, puis à passer la pâte ainsi obtenue à travers une filière pour former des extrudés de diamètre compris entre 0,4 et 4 mm.

Généralement, le catalyseur renferme également au moins un élément catalytique, par exemple un métal ayant une fonction hydro-déshydrogénante. La fonction hydrodeshydrogénante est généralement assurée par au moins un métal ou composé de métal du groupe VIII tels que le nickel et le cobalt notamment. On peut utiliser une combinaison d'au moins un métal ou composé de métal du groupe VI (notamment le molybdène ou le tungstène) et d'au moins un métal ou composé de métal du groupe VIII (notamment le cobalt ou le nickel) de la classification périodique des éléments. La concentration totale en oxydes de métaux des groupes VI et/ou VIII est comprise entre 1 et 40 % en poids et de préférence entre 3 et 40 %, avantageusement entre 8 et 40%, voire 10 à 40% et mieux 10-30% en poids, et le rapport pondéral exprimé en oxyde métallique de métal (ou métaux) du groupe VI sur métal (ou métaux) du groupe VIII est compris entre 1,25 et 20 et de préférence entre 2 et 10. De plus, ce catalyseur peut contenir du phosphore. La teneur en phosphore, exprimée en concentration en oxyde de phosphore $P_2O_5$, sera inférieure à 15 % en poids et de préférence inférieure à 10 % en poids.

La fonction hydrogénante telle qu'elle a été définie précédemment (métaux du groupe VIII ou association d'oxydes de métaux des groupes VI et VIII) peut être introduite dans le catalyseur à divers niveaux de la préparation et de diverses manières.

Elle peut être introduite en partie seulement (cas des associations d'oxydes de métaux des groupes VI et VIII) ou en totalité au moment du malaxage du phyllosilicate 2:1 dioctaédrique, synthétisé en milieu fluorure et ponté, avec le gel d'oxyde choisi comme matrice. Elle peut être introduite par une ou plusieurs opérations d'échange ionique sur le support calciné constitué du phyllosilicate 2:1 dioctaédrique synthétisé en milieu fluorure et éventuellement ponté et dispersé dans la matrice choisie, à l'aide de solutions contenant les sels précurseurs des métaux choisis lorsque ceux-ci appartiennent au groupe VIII. Elle peut être introduite par une ou plusieurs opérations d'imprégnation du support mis en forme et calciné, par une solution des précurseurs des oxydes des métaux des groupes VIII (notamment le cobalt et le nickel) lorsque les précurseurs des oxydes des métaux du groupe VI (notamment le molybdène ou le tungstène) ont été préalablement introduits au moment du malaxage du support. Elle peut enfin être introduite par une ou plusieurs opérations d'imprégnation du support calciné constitué d'un phyllosilicate 2:1 dioctaédrique synthétisé en milieu fluorure et ponté et de la matrice, par des solutions contenant les précurseurs des oxydes de métaux des groupes VI et/ou VIII, les précurseurs des oxydes de métaux de groupe VIII étant de préférence introduits après ceux du groupe VI ou en même temps que ces derniers.

Dans le cas où les oxydes des métaux sont introduits en plusieurs imprégnations des sels précurseurs correspondants, une étape de calcination intermédiaire du catalyseur devra être effectuée à une température comprise entre 250 et 600 °C.

L'imprégnation du molybdène peut être facilitée par ajout d'acide phosphorique dans les solutions de paramolybdate d'ammonium.

Les catalyseurs ainsi obtenus sont utilisés de façon générale pour la conversion d'hydrocarbures, et en particulier pour l'hydrocraquage. Ils présentent en hydrocraquage, par rapport à l'art antérieur, une sélectivité améliorée pour la production de distillats moyens de très bonne qualité.

Les charges employées dans le procédé sont des gas-oils, des gas-oils sous vide, des résidus désasphaltés ou hydrotraités ou équivalents. Ce peut être des coupes lourdes constituées d'au moins de 80 % en volume de composés dont les points d'ébullition sont situés entre 350 et 580 °C (c'est à dire correspondant à des composés contenant au moins 15 à 20 atomes de carbone). Elles contiennent généralement des hétéroatomes tels que soufre et azote. La teneur en azote est usuellement comprise entre 1 et 5000 ppm poids et la teneur en soufre entre 0,01 et 5% poids. Les conditions de l'hydrocraquage telles que, température, pression, taux de recyclage d'hydrogène, vitesse volumique horaire, pourront être très variables en fonction de la nature de la charge, de la qualité des produits désirés, des installations dont dispose le raffineur.

Les températures sont en général supérieures à 230 °C et souvent comprises entre 300°C et 480°C, de préférence inférieures à 450°C. La pression est supérieure ou égale à 2 MPa et en général supérieure à 3 MPa voire 10 MPa. Le taux de recyclage d'hydrogène est au minimum de 100 et souvent compris entre 260 et 3000 litres d'hydrogène par litre de charge. La vitesse volumique horaire est comprise en général entre 0,2 et 10 h$^{-1}$.

Les résultats qui importent au raffineur sont l'activité et la sélectivité en distillats moyens. Les objectifs fixés doivent être réalisés dans des conditions compatibles avec la réalité économique. Ainsi le raffineur cherche-t-il à diminuer la température, la pression, le taux de recyclage d'hydrogène et à maximiser la vitesse volumique horaire. Il est connu que la conversion peut être augmentée par une élévation de température, mais c'est souvent au détriment de la sélectivité. La sélectivité en distillats moyens s'améliore avec une augmentation de la pression ou du taux de recyclage d'hydrogène, mais ceci au détriment de l'économie du procédé. Ce type de catalyseur permet d'atteindre dans des conditions de marche classique des sélectivités en distillats moyens de point d'ébullition compris entre 150 °C et 380 °C supérieurs à 65 %, et ceci pour des niveaux de conversion, en produits de point d'ébullition inférieur à 380 °C (380⁻ °C), supérieurs à 55 % en volume. Ce catalyseur présente de plus, dans ces conditions, une stabilité remarquable. Enfin, du fait de la composition du catalyseur, celui-ci est facilement régénérable.

D'une façon générale, on a observé que les phyllosilicates 2 :1 dioctaédriques selon l'invention présentent une stabilité thermique remarquable, puisqu'ils ont pu subir des températures de 800°C sans dégradation.

Les exemples suivants illustrent la présente invention sans toutefois en limiter la portée.

<u>Exemple 1 :</u> Préparation d'un phyllosilicate 2:1 dioctaédrique ponté (PDP1), qui est de type beidellite sous forme sodique conforme à l'invention.

Pour cette préparation à 36g d'eau distillée, on ajoute successivement et conformément aux indications fournies :

- 0,31 g du sel NaF (Prolabo) sous agitation modérée,
- 0,66 g de l'acide HF à 40% (Fluka),
- 2,35 g de l'oxyhydroxyde AlOOH hydraté (Catapal B Vista) sous agitation vigoureuse,
- 2,50 g de l'oxyde SiO$_2$ pulvérulent (Aerosil 130 de Degussa), sous agitation modérée.

La composition de l'hydrogel ainsi préparé, rapportée à une mole de l'oxyde SiO$_2$ est

1,0 SiO$_2$ ; 0,382 Al$_2$O$_3$ ; 0,177 NaF ; 0,20 HF ; 48 H$_2$O soit en terme de rapport molaire :

| | |
|---|---|
| Si/Al = | 1,309 |
| Na$^+$/Si = | 0,177 |
| F/Si = | 0,377 |
| HF/Si = | 0,20 |
| H$_2$O/Si = | 48 |

Cette composition ne tient pas compte de l'eau apportée par la source d'aluminium et par l'acide HF.

L'hydrogel ainsi obtenu est mûri 4 heures à température ambiante (20°C) sous agitation modérée. Le pH est alors voisin de 5.

La cristallisation s'effectue ensuite dans un autoclave en acier, chemisé par un revêtement de polytétrafluoroéthylène (Teflon), d'une contenance de 120 ml, à 220°C, sous pression autogène durant 168 heures sans agitation. L'autoclave est ensuite refroidi à l'air ambiant. Le pH de fin de synthèse est d'environ 4.

Le produit est ensuite récupéré, filtré et lavé abondamment à l'eau distillée. Il est alors séché à 40-50°C durant 24 heures. Au bout de ces 24 heures, le produit obtenu, à 50% d'humidité relative, est caractérisé par son diagramme de diffraction des rayons X indiqué ci-après :

| d$_{hkl}$ (Å) | I/Io |
|---|---|
| 12,42 | 100 |

(suite)

| $d_{hkl}$ (Å) | I/Io |
|---|---|
| 6,22 | 6 |
| 4,46 | 55 |
| 2,55 | 21 |
| 2,48 | 15 |
| 2,25 | 2 |
| 2,22 | 3,5 |
| 1,74 | 5 |
| 1,73 | 6 |
| 1,69 | 13 |
| 1,66 | 7 |
| 1,62 | 2 |
| 1,48 | 20 |

Les propriétés de gonflement du phyllosilicate obtenu sont reportées dans le tableau ci-dessous :

| | HR 50% | HR 80% | 14% glycérol dans l'éthanol |
|---|---|---|---|
| $d_{hkl}$ (Å) | 12,4 | 15,5 | 17,6 |

HR : humidité relative.

La teneur pondérale en fluor du phyllosilicate obtenu est de 3,15%. Un signal à -133 ppm est présent dans le spectre de RMN, obtenu avec rotation à l'angle magique du $^{19}F$ du phyllosilicate préparé selon cet exemple.

Le solide ainsi préparé est alors soumis à trois échanges ioniques successifs par une solution de nitrate d'ammonium de manière à obtenir la forme $NH_4+$ du phyllosilicate. Pour cela, 10 grammes du phyllosilicate préparé précédemment sont mis en suspension dans 250 ml d'une solution molaire de nitrate d'ammonium, puis agités sous reflux durant 2 heures. Le solide est ensuite filtré, lavé. Ce cycle de traitement est reproduit encore deux fois supplémentaires. Le solide otenu est ensuite séché à 60°C durant 10 heures.

Le phyllosilicate 2:1 dioctaédrique ainsi préparé est dénommé PD1. Ce dernier va ensuite subir une étape de pontage selon le mode opératoire décrit ci-après.

8 g du phyllosilicate 2:1 dioctaédriques ainsi préparé et dénommé PD1 et sous forme $NH_4$, sont mis en suspension dans 80 ml d'une solution de chlorure d'hexadecyltriméthylammonium (CTMA-Cl) de concentration 0,1 M. Après une heure d'agitation à température ambiante, l'ensemble est filtré, lavé avec deux fois 200 ml d'eau distillée puis séché à 60°C durant 8 heures. L'échantillon PD1 traité au CTMA précédemment est mis en suspension dans un mélange composé de 4,48 g d'octylamine ($C_8H_{17}NH_2$) et de 60,32g de tétraorthosilicate d'éthyle Si(OEt)$_4$. Après 30 minutes d'agitation, l'ensemble est filtré et puis séché à 60°C durant 8 heures. L'échantillon est ensuite calciné à 530°C durant 3 heures sous air puis 2 heures sous oxygène pur.

La $d_{001}$ de l'échantillon après calcination est de 34,6 Å et sa surface spécifique est de 390 m$^2$/g.

Le phyllosilicate 2:1 dioctaédrique ainsi préparé est dénommé PDP1

**Exemple 2 :** Préparation du catalyseur C1 (conforme à l'invention)

Le phyllosilicate 2:1 dioctaédriques PP1 tel que décrit dans l'exemple 1 est malaxé avec de l'alumine de type SB3 fournie par la société Condéa. La pâte malaxée est ensuite extrudée à travers une filière de diamètre 1,4 mm. Les extrudés sont imprégnés à sec par une solution d'un mélange d'heptamolybdate d'ammonium, de nitrate de nickel et d'acide orthophosphorique, et enfin calcinés sous air à 550 °C in-situ dans le réacteur. Les teneurs pondérales en oxydes actifs sont les suivantes (par rapport au catalyseur) :

    2,5 % en poids d'oxyde de phosphore $P_2O_5$
    15 % en poids d'oxyde de molybdène $MoO_3$
    5 % en poids d'oxyde de nickel NiO

La teneur en argile pontée dans l'ensemble du catalyseur est de 30%.

**Exemple 3**: Préparation d'un phyllosilicate 2:1 dioctaédrique ponté PDP2, qui est une beidellite sous forme ammonium, conforme à l'invention.

Pour cette préparation, à 36g d'eau distillée, on ajoute successivement et conformément aux indications fournies :

- 0,385 g du sel $NH_4F$ (Prolabo) sous agitation modérée,
- 0,312 g de l'acide HF à 40% (Fluka),
- 2,71 g de l'oxyhydroxyde hydraté AlOOH (Catapal B Vista) sous agitation vigoureuse,
- 2,50 g de l'oxyde $SiO_2$ pulvérulent (Aerosil 130 de Degussa), sous agitation modérée.

La composition de l'hydrogel ainsi préparé, rapportée à une mole de l'oxyde $SiO_2$ est

$$1,0\ SiO_2\ ;\ 0,44\ Al_2O_3\ ;\ 0,25\ NH_4F\ ;\ 0,15\ HF\ ;\ 48\ H_2O$$

soit en termes de rapport molaire :

| | |
|---|---|
| Si/Al = | 1,136 |
| $NH_4$+/Si = | 0,25 |
| F/Si = | 0.40 |
| HF/Si = | 0.15 |
| $H_2O$/Si = | 48 |

Cette composition ne tient pas compte de l'eau apportée par la source d'aluminium et par l'acide HF.

L'hydrogel ainsi obtenu est mûri 4 heures à la température ambiante (20°C) sous agitation modérée. Le pH est alors voisin de 5.

La cristallisation s'effectue ensuite dans un autoclave en acier, chemisé par un revêtement Teflon, d'une contenance de 120 ml, à 220°C, sous pression autogène durant 168 heures sans agitation. L'autoclave est ensuite refroidi à l'air ambiant. Le pH de fin de synthèse est d'environ 5,5.

Le produit est ensuite récupéré, filtré et lavé abondamment à l'eau distillée. Il est alors séché à 40-50°C durant 24 heures. Au bout de ces 24 heures, le produit obtenu, à 50% d'humidité relative, est caractérisé par son diagramme de diffraction des rayons X similaire à celui donné dans le tableau de l'exemple 1.

La teneur pondérale en fluor du phyllosilicate obtenu est de 2,9%. Un signal à -133 ppm est présent dans le spectre de RMN, obtenu par rotation à l'angle magique, du $^{19}$F du phyllosilicate préparé selon cet exemple.

Le phyllosilicate 2:1 dioctaédrique ainsi préparé est dénommé PD2. Ce dernier va ensuite subir une étape de pontage selon le mode opératoire décrit ci-après. 8 g du phyllosilicate 2:1 dioctaédrique ainsi préparé et dénommé PD2 et sous forme ammonium, sont mis en suspension dans 80 ml d'une solution de chlorure d'hexadécyltriméthylammonium (CTMA-Cl) de concentration 0,1 M. Après une heure d'agitation à température ambiante, l'ensemble est filtré, lavé avec deux fois 200 ml d'eau distillée puis séché à 60°C durant 8 heures. L'échantillon PD2 traité au CTMA précédemment est mis en suspension dans un mélange composé de 4,48g d'octylamine ($C_8H_{17}NH_2$) et de 60,32g de tétraorthosilicate d'éthyle (Si(OEt)$_4$) et 2,96g d'isoproxide d'aluminium. Après 30 minutes d'agitation, l'ensemble est filtré et puis séché à 60°C durant 8 heures. L'échantillon est ensuite calciné à 530°C durant 3 heures sous air puis 2 heures sous oxygène pur.

La $d_{001}$ de l'échantillon après calcination est de 31,2 Å et une surface spécifique de 375 m$^2$/g.

Le phyllosilicate 2:1 dioctaédrique ainsi préparé est dénommé PDP2

**Exemple 4:** Préparation du catalyseur C2 (conforme à l'invention)

Le catalyseur C2 est préparé selon le même mode opératoire que celui décrit dans l'exemple 2 mais en utilisant cette fois le phyllosilicate 2:1 dioctaédrique PDP2. La teneur pondérale en argile pontée dans l'ensemble du catalyseur est de 30%.

**Exemple 5:** Préparation d'un phyllosilicate 2:1 dioctaédrique ponté PDP3, qui est un beidellite forme H pontée

par des piliers $SiO_2$-$ZrO_2$

10g de beidellite PD2, préparée selon l'exemple 3 de ce brevet et calcinée à 550°C durant 4 heures, est mis en suspension dans 442 ml d'une solution de bromure d'éthylhexadecyldiméthylammonium ($EtC_{16}DMABr$) 0,1 M. Après 1 h d'agitation à température ambiante, l'ensemble est filtré puis séché à 60°C durant 1 nuit (environ 12 heures).

5 g de la beidellite PD2 traitée par $EtC_{16}DMABr$ sont mis en suspension dans un mélange composé de 37,7 g de tétraorthosilicate d'éthyle (TEOS), 1,4 g de $Zr(OC_3H_7)_4$ et 2,8 g d'octylamine (rapports molaires TEOS/octylamine=8,2 et TEOS/$Zr(OC_3H_7)_4$ = 40). L'ensemble est agité durant 30 minutes à température ambiante puis filtré et séché à 60°C durant 12 h. Le matériau est ensuite calciné à 600°C selon le programme suivant : montée en température jusqu'à 600°C, depuis la température ambiante en 8 heures, calcination sous air sec à 600°C durant 4 heures, puis redescente en température jusqu'à l'ambiante.

La perte en masse consécutive à la calcination est de l'ordre de 23%. La périodicité $d_{001}$ du produit PDP3 est de 37,4 Å et la surface spécifique est de l'ordre de 530 $m^2/g$.

**Exemple 6 :** Le catalyseur C4 selon l'invention est ensuite préparé selon le mode opératoire décrit dans l'exemple 2 en utilisant l'échantillon PDP3. La teneur pondérale en beidellite pontée PDP3 selon l'invention, dans l'ensemble du catalyseur C4, est de 50%.

**Exemple 7**: Préparation d'un phyllosilicate 2:1 dioctaédrique ponté PDP4, qui est un beidellite forme H pontée par des piliers $SiO_2$

5 g de beidellite forme hydrogène traitée $EtC_{16}DMABr$ sont mis en suspension dans un mélange de 37,7 g de TEOS et 1,26 g de décylamine ($C_{10}H_{21}NH_2$). Après 30 minutes d'agitation, l'ensemble est filtré et séché à 60°C avant d'être calciné à 600°C selon le protocole précédemment décrit dans l'exemple 5.

La perte en masse consécutive à la calcination atteint dans ce cas 22%. La périodicité $d_{001}$ de l'échantillon référencé PDP4 est quant à elle de 37 Å et la surface spécifique d'environ 460 $m^2/g$.

**Exemple 8:** Le catalyseur C5 selon l'invention est ensuite préparé selon le mode opératoire décrit dans l'exemple 2 en utilisant l'échantillon PDP4. La teneur pondérale en beidellite pontée PDP4 selon l'invention, dans l'ensemble du catalyseur C5, est de 40%.

**Exemple 9** : Préparation du catalyseur C3 (non conforme à l'invention).

On utilise pour cet exemple une zéolithe H-Y dont les caractéristiques physicochimiques sont les suivantes :

- Si/Al atomique global (mesuré par fluorescence X) : 17,5
- Si/Al atomique de charpente (déterminé par RMN du $^{29}Si$) : 21
- teneur en Na (ppm poids) : 450
- Paramètre cristallin (Diffraction des rayons X) (Å) : 24,27

On ajoute 3 % en poids d'acide nitrique pur à 67 % par rapport au poids sec de poudre de zéolithe H-Y afin d'obtenir la peptisation de la poudre. Après malaxage, la pâte obtenue est extrudée à travers une filière de diamètre 1,4 mm. Les extrudés sont calcinés puis imprégnés à sec par une solution d'un mélange d'heptamolybdate d'ammonium, de nitrate de nickel et d'acide orthophosphorique, et enfin calcinés sous air à 550°C in-situ dans le réacteur. Les teneurs pondérales en oxydes actifs sont les suivantes (par rapport au catalyseur) :

2,5% en poids d'oxyde de phosphore P2O5,
15% en poids d'oxyde de molybdène MoO3
5% en poids d'oxyde de Nickel NiO

La teneur pondérale en zéolithe H-Y dans l'ensemble du catalyseur est de 10%.

**Exemple 10** : Evaluation des catalyseurs C1, C2, C3, C4 et C5 dans un test d'hydrocraquage.

Les catalyseurs C1, C2, C3, C4 et C5 dont les préparations sont décrites dans les exemples précédents sont utilisés dans les conditions de l'hydrocraquage sur une charge pétrolière dont les principales caractéristiques sont les suivantes :

| | |
|---|---|
| point initial | 277 °C |
| point 10 % | 381 °C |
| point 50 % | 482 °C |
| point 90 % | 531 °C |
| point final | 545 °C |
| point d'écoulement | + 39 °C |
| densité (20/4) | 0,919 |

(suite)

| | |
|---|---|
| Soufre (% poids) | 2,46 |
| Azote (ppm poids) | 930 |

L'unité de test catalytique comprend un réacteur en lit fixe, à circulation ascendante de la charge ("up-flow"), dans lequel est introduit 80 ml de catalyseur. Chacun des catalyseurs est sulfuré par un mélange n-hexane/DMDS + aniline jusqu'à 320 °C. La pression totale est de 9 MPa, le débit d'hydrogène est de 1000 litres d'hydrogène gazeux par litre de charge injectée, la vitesse volumique horaire est de 1,0.

Les performances catalytiques sont exprimées par la sélectivité brute mesurée pour une conversion brute de 70% poids. Ces performances catalytiques sont mesurées sur le catalyseur après qu'une période de stabilisation, généralement au moins 48 heures, ait été respectée.

La conversion brute CB est prise égale à :

$$CB = \% \text{ poids de } 380^{-} \text{ dans les effluents}$$

La sélectivité (% poids) brute SB est prise égale à :

$$SB = \frac{\text{poids } 150\,/380 \text{ effluents}}{\text{poids } 380^{-} \text{ effluents}} \times 100$$

| Catalyseurs | C1 conforme | C2 conforme | C3 non conforme | C4 conforme | C5 conforme |
|---|---|---|---|---|---|
| SB = (70% CB) | 73,5 | 72,9 | 68,2 | 74,1 | 73,0 |

L'utilisation d'un phyllosilicate 2:1 dioctaédrique ponté selon l'invention permet donc un gain substantiel sélectivité en distillats moyens à iso-conversion.

**Exemple 11** : Evaluation des catalyseurs C1, C2 et C3 dans un test d'hydrocraquage basse pression.

Les catalyseurs C1, C2 et C3 ont été comparés dans un test d'hydrocraquage basse pression également appelé hydrocraquage doux. La charge utilisée lors du test catalytique est la même que celle utilisée dans l'exemple 10.

L'unité de test catalytique comprend un réacteur en lit fixe, à circulation ascendante de la charge ("up-flow"), dans lequel est introduit 80 ml de catalyseur. Chacun des catalyseurs est sulfuré par un mélange n-hexane/DMDS + aniline jusqu'à 320 °C. La pression totale est de 5 MPa, le débit d'hydrogène est de 500 litres d'hydrogène gazeux par litre de charge injectée, la vitesse volumique horaire est de 0,5.

Les performances catalytiques sont exprimées par la sélectivité brute pour une conversion brute égale à 50 %. Ces performances catalytiques sont mesurées sur le catalyseur après qu'une période de stabilisation, généralement au moins 48 heures, ait été respectée.

La conversion brute CB est prise égale à :

$$CB = \% \text{ poids de } 380^{-} \text{ dans les effluents}$$

La sélectivité (% poids) brute SB est prise égale à :

$$SB = \frac{\text{poids } 150\,/\,380 \text{ effluents}}{\text{poids } 380^{-} \text{ effluents}} \times 100$$

| Catalyseur | C1 conforme | C2 conforme | C3 non conforme |
|---|---|---|---|
| SB = (50% CB) | 84,2 | 84,8 | 80,5 |

L'utilisation d'un phyllosilicate 2:1 dioctaédriques ponté selon l'invention (catalyseurs C1 et C2) permet un gain en sélectivité par rapport à la zéolithe Y.

**Revendications**

1. Phyllosilicate 2:1 dioctaédrique dont la distance réticulaire est au moins égale à 2,00 x $10^{-9}$ m et comprenant dans l'espace interfoliaire des piliers à base d'au moins un des composés choisi dans le groupe formé par $SiO_2$, $Al_2O_3$, $TiO_2$, $ZrO_2$, $V_2O_5$, ou toute combinaison de ces derniers.

2. Phyllosilicate 2:1 dioctaédrique selon la revendication 1 contenant du fluor.

3. Phyllosilicate 2:1 dioctaédrique selon l'une des revendications précédentes, dont la distance réticulaire est au moins égale à 2,65 x $10^{-9}$m.

4. Phyllosilicate 2:1 dioctaédrique selon l'une des revendications précédentes, dont la distance réticulaire est au moins égale à 3,0 x $10^{-9}$m.

5. Phyllosilicate 2:1 dioctaédrique selon l'une des revendications précédentes, dont la distance réticulaire est au moins égale à 3,3 x $10^{-9}$m.

6. Phyllosilicate 2:1 dioctaédrique selon l'une des revendications précédentes, dont la distance réticulaire est d'au plus 6,0 x $10^{-9}$m.

7. Phyllosilicate 2:1 dioctaédrique selon l'une des revendications précédentes, préparé en milieu fluorure.

8. Phyllosilicate 2:1 dioctaédrique selon la revendication 7 ayant été synthétisé en milieu fluoré en présence de l'acide HF et à un pH inférieur à 9.

9. Procédé de préparation d'un phyllosilicate 2:1 dioctaédrique selon l'une des revendications précédentes dans lequel le phyllosilicate est mis en suspension dans une solution d'un agent tensio-actif, puis après séparation du solide de la solution, le phyllosilicate est mis au contact d'un mélange comprenant au moins une amine primaire ou secondaire et au moins un alkoxyde d'un élément choisi dans le groupe formé par Si, Al, Zr, Ti, V.

10. Procédé selon la revendication 9, dans lequel le phyllosilicate mis en suspension est sous forme ammonium ($NH_4^+$)

11. Procédé selon l'une des revendications 9 ou 10, dans lequel la solution d'agent tensio-actif est à une concentration de 0,01 mole/litre à 1 mole/litre.

12. Procédé selon l'une des revendications 9 à 11, dans lequel l'amine primaire $RNH_2$ ou l'amine secondaire R'RNH ont des radicaux R et R' choisis dans le groupe formé par les radicaux alkyl, iso-alkyl, naphtényl, aromatique subsitutés ou non, R et R' ayant de 1 à 16 atomes de carbone, et procédé dans lequel l'alkoxyde M(OR)n de l'élément M présente un radical R choisi dans le groupe formé par les radicaux alkyl, iso-alkyl, naphtényl, aromatique substitués ou non, ayant de 1 à 16 atomes de carbone.

13. Catalyseur comprenant au moins un phyllosilicate 2:1 dioctaédrique selon l'une des revendications 1 à 8, au moins une matrice et éventuellement une zéolithe Y.

14. Catalyseur comprenant au moins un phyllosilicate 2:1 dioctaédrique préparé selon l'une des revendications 9 à 12, au moins une matrice et éventuellement une zéolithe Y.

15. Catalyseur selon l'une des revendications 13 à 14 comprenant de

   - 1-80% poids d'au moins un phyllosilicate 2:1 dioctaédrique
   - de 0-30% poids d'au moins une zéolithe Y,
   - de 1-99% poids d'au moins une matrice.

16. Catalyseur selon l'une des revendications 13 à 15, comprenant en outre au moins un élément catalytique.

17. Catalyseur selon la revendication 16, dans lequel l'élément catalytique est un élément hydro-déshydrogénant.

18. Catalyseur selon l'une des revendications 13 à 17, comprenant en outre du phosphore.

**19.** Catalyseur selon l'une des revendications 13 à 18, dans lequel la matrice est choisie dans le groupe formé par l'alumine, la silice, la magnésie, l'oxyde de titane, le zircone, les phosphates de titane, les phosphates de zirconium, l'oxyde de bore.

**20.** Catalyseur selon l'une des revendications 13 à 19, comprenant un phyllosilicate 2:1 dioctaédrique contenant du fluor.

**21.** Catalyseur selon l'une des revendications 13 à 20, comprenant une zéolite Y désaluminée.

**22.** Procédé pour la conversion d'hydrocarbures avec un catalyseur selon l'une des revendications 13 à 21.

**23.** Procédé selon la revendication 22 pour l'hydrocraquage avec un catalyseur comprenant également au moins un élément hydro-déshydrogénant.

**24.** Procédé selon la revendication 23, opérant à plus de 230°C, sous une pression d'au moins 2MPa et avec une VVH de $0,2\text{-}10h^{-1}$.

**25.** Procédé selon l'une des revendications 23 à 24 opérant sur des gazoles, gazoles sous vide, résidus désasphaltés ou résidus hydrotraités.

# EP 0 908 233 A1

Office européen
des brevets

**RAPPORT DE RECHERCHE EUROPEENNE**

Numéro de la demande

EP 98 40 2522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO 88 00091 A (MOBIL OIL CORP) 14 janvier 1988 | 1,3-6,9, 10, 12-14, 16,19 | B01J29/04 C10G47/16 |
| A | * page 4, alinéa 3 * * page 9, alinéa 3 - page 11, alinéa 2; revendications 1,7,10,11 * | 17,21,22 | |
| A | EP 0 508 005 A (MOBIL OIL CORP) 14 octobre 1992 * page 4, ligne 8 - ligne 22; exemple 1 * | 1,9,10, 12-17, 19,22-25 | |
| A | US 5 308 812 A (SALEM GEORGE ET AL) 3 mai 1994 * abrégé * | 1,2, 7-10,22 | |
| A | EP 0 341 023 A (EXXON RESEARCH ENGINEERING CO) 8 novembre 1989 *revendications* | 1,2,7,9, 13,14, 22,23 | DOMAINES TECHNIQUES RECHERCHES (Int.Cl.6) |
| A | US 5 389 593 A (HOLMGREN JENNIFER S) 14 février 1995 * abrégé * | 1,2,7, 13,20,22 | B01J C10G |

Le présent rapport a été établi pour toutes les revendications

| Lieu de la recherche | Date d'achèvement de la recherche | Examinateur |
|---|---|---|
| LA HAYE | 15 janvier 1999 | Faria, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 98 40 2522

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-01-1999

| Document brevet cité au rapport de recherche | Date de publication | Membre(s) de la famille de brevet(s) | | Date de publication |
|---|---|---|---|---|
| WO 8800091 A | 14-01-1988 | US | 4859648 A | 22-08-1989 |
| | | AU | 597394 B | 31-05-1990 |
| | | AU | 7587087 A | 29-01-1988 |
| | | AU | 597395 B | 31-05-1990 |
| | | AU | 7590087 A | 29-01-1988 |
| | | AU | 598840 B | 05-07-1990 |
| | | AU | 7641687 A | 29-01-1988 |
| | | AU | 600498 B | 16-08-1990 |
| | | AU | 7643687 A | 29-01-1988 |
| | | AU | 598295 B | 21-06-1990 |
| | | AU | 7782187 A | 29-01-1988 |
| | | CA | 1283647 A | 30-04-1991 |
| | | CA | 1270001 A | 05-06-1990 |
| | | CA | 1283646 A | 30-04-1991 |
| | | CA | 1287611 A | 13-08-1991 |
| | | CA | 1287612 A | 13-08-1991 |
| | | CN | 1016771 B | 27-05-1992 |
| | | CN | 1014233 B | 09-10-1991 |
| | | CN | 1016772 B | 27-05-1992 |
| | | CN | 1016677 B | 20-05-1992 |
| | | CN | 1016773 B | 27-05-1992 |
| | | DK | 101288 A | 26-02-1988 |
| | | DK | 101388 A | 26-02-1988 |
| | | DK | 101488 A | 26-02-1988 |
| | | DK | 101588 A | 26-02-1988 |
| | | DK | 101688 A | 18-03-1988 |
| | | EP | 0295269 A | 21-12-1988 |
| | | EP | 0271563 A | 22-06-1988 |
| | | EP | 0272306 A | 29-06-1988 |
| | | EP | 0270659 A | 15-06-1988 |
| | | EP | 0271575 A | 22-06-1988 |
| | | EP | 0508005 A | 14-10-1992 |
| | | IN | 169964 A | 18-01-1992 |
| | | JP | 2653805 B | 17-09-1997 |
| | | JP | 63503538 T | 22-12-1988 |
| | | JP | 1500186 T | 26-01-1989 |
| | | JP | 1500192 T | 26-01-1989 |
| | | JP | 2554685 B | 13-11-1996 |
| | | JP | 63503539 T | 22-12-1988 |
| | | US | 4777268 A | 11-10-1988 |
| | | WO | 8800176 A | 14-01-1988 |
| | | WO | 8800090 A | 14-01-1988 |
| | | WO | 8800093 A | 14-01-1988 |
| | | WO | 8800092 A | 14-01-1988 |
| | | US | 4831005 A | 16-05-1989 |
| | | US | 4831006 A | 16-05-1989 |

EPO FORM P0460

Pour tout renseignement concernant cette annexe : voir Journal Officiel de l'Office européen des brevets, No.12/82

# EP 0 908 233 A1

**ANNEXE AU RAPPORT DE RECHERCHE EUROPEENNE
RELATIF A LA DEMANDE DE BREVET EUROPEEN NO.**

EP 98 40 2522

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-01-1999

| Document brevet cité au rapport de recherche | Date de publication | Membre(s) de la famille de brevet(s) | | Date de publication |
|---|---|---|---|---|
| WO 8800091 A | | US | 4980333 A | 25-12-1990 |
| | | US | 5015360 A | 14-05-1991 |
| | | US | 5128303 A | 07-07-1992 |
| EP 0508005 A | 14-10-1992 | US | 4859648 A | 22-08-1989 |
| | | AU | 597394 B | 31-05-1990 |
| | | AU | 7587087 A | 29-01-1988 |
| | | AU | 597395 B | 31-05-1990 |
| | | AU | 7590087 A | 29-01-1988 |
| | | AU | 598840 B | 05-07-1990 |
| | | AU | 7641687 A | 29-01-1988 |
| | | AU | 600498 B | 16-08-1990 |
| | | AU | 7643687 A | 29-01-1988 |
| | | AU | 598295 B | 21-06-1990 |
| | | AU | 7782187 A | 29-01-1988 |
| | | CA | 1283647 A | 30-04-1991 |
| | | CA | 1270001 A | 05-06-1990 |
| | | CA | 1283646 A | 30-04-1991 |
| | | CA | 1287611 A | 13-08-1991 |
| | | CA | 1287612 A | 13-08-1991 |
| | | CN | 1016771 B | 27-05-1992 |
| | | CN | 1014233 B | 09-10-1991 |
| | | CN | 1016772 B | 27-05-1992 |
| | | CN | 1016677 B | 20-05-1992 |
| | | CN | 1016773 B | 27-05-1992 |
| | | DK | 101288 A | 26-02-1988 |
| | | DK | 101388 A | 26-02-1988 |
| | | DK | 101488 A | 26-02-1988 |
| | | DK | 101588 A | 26-02-1988 |
| | | DK | 101688 A | 18-03-1988 |
| | | EP | 0295269 A | 21-12-1988 |
| | | EP | 0271563 A | 22-06-1988 |
| | | EP | 0272306 A | 29-06-1988 |
| | | EP | 0270659 A | 15-06-1988 |
| | | EP | 0271575 A | 22-06-1988 |
| | | IN | 169964 A | 18-01-1992 |
| | | JP | 2653805 B | 17-09-1997 |
| | | JP | 63503538 T | 22-12-1988 |
| | | JP | 1500186 T | 26-01-1989 |
| | | JP | 1500192 T | 26-01-1989 |
| | | JP | 2554685 B | 13-11-1996 |
| | | JP | 63503539 T | 22-12-1988 |
| | | US | 4777268 A | 11-10-1988 |
| | | WO | 8800091 A | 14-01-1988 |
| | | WO | 8800176 A | 14-01-1988 |
| | | WO | 8800090 A | 14-01-1988 |

EPO FORM P0460

Pour tout renseignement concernant cette annexe : voir Journal Officiel de l'Office européen des brevets, No.12/82

16

**ANNEXE AU RAPPORT DE RECHERCHE EUROPEENNE
RELATIF A LA DEMANDE DE BREVET EUROPEEN NO.**                    EP 98 40 2522

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-01-1999

| Document brevet cité au rapport de recherche | | Date de publication | Membre(s) de la famille de brevet(s) | | Date de publication |
|---|---|---|---|---|---|
| EP 0508005 | A | | WO | 8800093 A | 14-01-1988 |
| | | | WO | 8800092 A | 14-01-1988 |
| | | | US | 4831005 A | 16-05-1989 |
| | | | US | 4831006 A | 16-05-1989 |
| | | | US | 4980333 A | 25-12-1990 |
| | | | US | 5015360 A | 14-05-1991 |
| | | | US | 5128303 A | 07-07-1992 |
| US 5308812 | A | 03-05-1994 | DE | 69412321 D | 17-09-1998 |
| | | | DE | 69412321 T | 24-12-1998 |
| | | | EP | 0618008 A | 05-10-1994 |
| | | | US | 5414185 A | 09-05-1995 |
| EP 0341023 | A | 08-11-1989 | AUCUN | | |
| US 5389593 | A | 14-02-1995 | US | 5409597 A | 25-04-1995 |

EPO FORM P0460

Pour tout renseignement concernant cette annexe : voir Journal Officiel de l'Office européen des brevets, No.12/82